# EUROPÄISCHE PATENTSCHRIFT

(11) **EP 1 514 753 B1**
(45) Veröffentlichungstag und Bekanntmachung des Hinweises auf die Patenterteilung: **01.02.2006**
(21) Anmeldenummer: 03020610.6
(22) Anmeldetag: 10.09.2003
(51) Int. Cl.: B60S 1/50

(54) **Sensoranordnung zur Erfassung des Aggregatzustandes einer Flüssigkeit**
Device for sensing fluid parameters
Appareil pour détecter les paramètres d'un fluide

(43) Veröffentlichungstag der Anmeldung: 16.03.2005
(73) Patentinhaber: DBK David + Baader GmbH, 76870 Kandel (DE)
(72) Erfinder: Gschwind, Thomas, 67098 Bad Dürkheim (DE)
(74) Vertreter: Grünecker, Kinkeldey, Stockmair & Schwanhäusser Anwaltssozietät

(56) Entgegenhaltungen:
- EP-A- 0 116 419
- DE-A- 4 426 179
- US-A- 4 252 097
- US-A- 5 706 780
- US-B1- 6 266 842

## Beschreibung

Die Erfindung betrifft eine Anordnung zur Erfassung einer Zustandsgröße einer Flüssigkeit in einem Behälter, wie etwa die Temperatur oder den Aggregatzustand der Flüssigkeit, insbesondere von Wasser oder einer wässrigen Lösung in einem Behälter in Fahrzeugen. Hierbei gibt ein die Zustandsgröße der Flüssigkeit erfassender Sensor ein Meldesignal ab, welches das Einschalten einer Heizeinrichtung veranlasst, um Wärme in den Behälter einzubringen.

Für Waschflüssigkeiten, beispielsweise für den Waschvorgang der Windschutzscheibe an einem PKW, sind Anordnungen zur Temperaturkontrolle in dem Waschmittelbehälter bekannt. Diese sind so ausgebildet, dass die Temperatur der Flüssigkeit (über einen thermischen Sensor) erfasst wird und die Anordnung so ausgelegt ist, dass bei Absinken der Temperatur unter 0 °C oder unter den Erstarrungspunkt der Flüssigkeit die Heizeinrichtung in Gang gesetzt wird. Als Beispiel einer dieser Anordnungen kann auf die Schrift DE 44 26 179 A1 verwiesen werden.

Es besteht also bei Frost-Temperaturen die Gefahr, dass die Waschflüssigkeit einfriert und nicht zum Waschen zur Verfügung steht. Weiterhin ist das Problem vorhanden, dass durch Ausdehnung der erstarrenden Waschflüssigkeit der Waschmittelbehälter und/oder die zugehörigen Flüssigkeitsleitungen zerstört werden.

Die Erstarrungstemperatur der Waschflüssigkeit hängt vom Mischungsverhältnis mit Frostschutzmittel ab. Weiterhin kann die Waschflüssigkeit an verschiedenen Stellen im PKW unterschiedlich stark von der Abkühlung betroffen sein, so dass Teile in der Anlage schon gefroren sind, während andere noch flüssig sind.

Zur vollständigen Überwachung der Temperatur wären somit mehrere Sensoren an verschiedenen Stellen in der Waschanlage notwendig; beispielsweise im Behälter, in der Förderpumpe, in der Leitung, und in den Verteilerröhrchen.

Ein anderer Ausgangspunkt der Erfindung sind Zusatzbehälter für Wasser oder für wässrige Lösungen, die den Verbrennungsvorgang und/oder die Wirksamkeit eines Katalysators unterstützen. Es gibt verschiedene Maßnahmen zur Verringerung von Stickoxidausstoß bei Gas- oder Dieselmotoren, um die Verbrennungstemperatur zu senken. Dazu gehört u.a. die Wassereinspritzung zusätzlich in den Verbrennungsraum.

Besonders effektiv erweist sich die Verminderung von Stickoxid mittels katalytischer Abgasnachbehandlung nach dem SCR-Verfahren. Hierbei wird eine wässrige Lösung von Ammoniak, besser noch von Harnstoff direkt in den Katalysator (nicht in den Verbrennungsraum) gespritzt. Typischerweise werden 32%ige Harnstoff-Lösungen in SCR-Systemen bei Dieselmotoren eingesetzt. Diese Lösung hat einen Gefrierpunkt von - 11°C. Daher müssen Vorrichtungen vorhanden sein, die das Einfrieren verhindern (Heizeinrichtungen) und/oder Vorrichtungen, welche die Temperatur überwachen

Fahrzeuge müssen daher einen Zusatztank mitführen, der bei einem LKW bis zu 50 Liter Volumen haben kann.

Die bekannten Anordnungen haben den Nachteil, dass die genaue Erstarrungstemperatur je nach Menge der Beimischung zum Wassergehalt variieren kann, die Heizeinrichtung aber dennoch auf einen bestimmten Temperatur-Schaltpunkt eingestellt ist. Entweder setzt die Heizung ein, obwohl keine Flüssigkeit erstarrt ist, oder die Heizung setzt nicht ein, weil die Einstellung des Temperatur-Schaltpunkts nicht mit der Konzentration des Frostschutzmittels abgestimmt ist. Dann würde erstarrte Waschflüssigkeit nicht erwärmt werden.

Daher liegt der Erfindung die Aufgabe zugrunde, eine Anordnung vorzuschlagen, welche die Feststellung der Erstarrung oder die beginnende Änderung des Aggregatzustandes ohne Zuhilfenahme einer thermischen Sensorik ermöglicht.

Die Lösung der Aufgabe wird im Merkmal des Hauptanspruchs formuliert. Weiterführende Ausführungsformen finden sich in den Unteransprüchen.

Der Kern der Erfindung ist als erstes ein Viskositäts-Sensor für die Feststellung der Erstarrung oder den Beginn der Erstarrung. Das die Viskosität erfassende Meldesignal aktiviert die Heizeinrichtung, wenn die ermittelte Viskosität von der Viskosität des fluiden Zustandes der Flüssigkeit abweicht. Die Viskosität einer als Waschflüssigkeit geeignete Flüssigkeit ändert sich im Temperaturbereich zwischen +10 °C und ihrem Erstarrungspunkt im negativen Celsiusbereich nur wenig. Nach Einsetzen der Eisbildung ändert sich die Viskosität deutlich, so dass die Viskosität eine sehr geeignete Zustandsgröße ist, den Beginn der Erstarrung oder den erstarrten Zustand selbst zu erfassen.

Der Viskositäts-Sensor ist vorzugsweise als mechanischer Sensor ausgestaltet. Dabei kann ein Bewegungselement in lineare oder in rotative Bewegung versetzbar sein. Es ist vorzugsweise auf elektromechanischem Wege bewegbar. Die Größe des Bewegungselements sollte so bemessen sein, dass es in der Flüssigkeit einen hinreichenden Strömungswiderstand erfährt. Nach diesem Messprinzip wird vorgeschlagen, ein bewegbares Element in die Flüssigkeit einzubringen, welches elektromechanisch beaufschlagbar ist, und dass ein Bewegungssensor vorhanden ist, der die Stellung oder die Bewegung des Bewegungselements erfasst.

Die Bewegung des Bewegungselements in der Flüssigkeit wird bei Auftreten von Eisteilchen verzögert. Die Verarbeitung des Signals des Bewegungssensors ist derart vorgegeben, dass zwischen ungehinderter und verzögerter Bewegung unterschieden wird. Das von der Verzögerung abhängige Meldesignal aktiviert die Heizeinrichtung, wenn die ermittelte Viskosität von der Viskosität der Flüssigkeit im vollständig fluiden Zustand abweicht. Die Heizeinrichtung nimmt die Erwärmung und das Auftauen der erstarrten Flüssigkeit vor, wobei auch die Heizleistung von 0 bis 100 % veränderbar gestaltet werden kann, je nach Größe des Bewegungssignals.

Das Bewegungselement kann um eine Achse drehbar angeordnet sein. Hier wäre beispielweise ein Flügelrad vorzusehen, welches von einem Elektromotor antreibbar ist. Der Elektromotor wird so geschaltet, dass er jeweils eine feste Drehzahl erzeugt. Die Leistungsaufnahme zur Erzeugung der festgelegten Drehzahl wird mit einem Wattmeter gemessen und ist abhängig von der Viskosität der Flüssigkeit.

Das Bewegungselement kann auch in einer linearen Führung linear bewegbar sein, wobei analoge Erfassungselemente für die Bestimmung der Viskosität eingesetzt werden.

Die Bewegung kann auch durch Aktivierung eines Elektromagneten erfolgen, der mit einem im Bewegungselement angeordneten Permanentmagneten zusammenwirkt. Die Zeitverzögerung zwischen Aktivierung des Elektromagneten und Beginn der Bewegung wird dabei als Maß für die vorhandene Viskosität genommen.

Der Bewegungssensor kann aus einem Reed-Kontakt bestehen, der von einem im Bewegungselement angeordneten und dem Reed-Kontakt zugeordneten Permanentmagneten angesprochen wird. Eine weitere, besonders bevorzugte Ausführungsform dieser Art ist ausführlich in der Figurenbeschreibung dargestellt. Hier ist das Bewegungselement an einer Wippe befestigt, deren Arme je einen Permanentmagneten tragen, wobei der erste Arm im Bereich eines Elektromagneten und der zweite Arm im Bereich eines Reedschalters angeordnet ist.

Eine zweite Ausführungsform der Erfindung wird beansprucht, mit der das spezifische Volumen, bzw. die Dichte der Flüssigkeit überwacht wird. Sie umfasst eine ein festes Volumen der Flüssigkeit aufnehmende Kammer, an der eine Druckmessanordnung angeordnet ist, welche in Abhängigkeit vom gemessenen Druck ein Meldesignal abgibt, wobei das Meldesignal der Druckmessanordnung in einer Elektronik derart verarbeitet wird, dass die von der Heizeinrichtung einzubringende Wärme von der Abweichung des gemessenen Drucks von dem Druck in der vollständig im fluiden Zustand befindlichen Flüssigkeit bemessen wird. In der abgeschlossenen Kammer nimmt die Flüssigkeit ein festes Volumen ein. In Abhängigkeit von der Temperatur, von der Zusammensetzung und von dem Aggregatzustand ändert sich die Dichte, bzw. das spezifische Volumen, welches als Messgröße genommen wird.

Die Kammer kann zum Durchspülen mit Flüssigkeit durchströmbar sein. Zur Sicherstellung des festen Volumens können die Zu- und Abflusskanäle mit einem Ventil verschließbar sein. Meist reichen jedoch die auftretenden Kapillarkräfte aus, um ein definiertes Flüssigkeitsvolumen im Inneren der Kammer zu halten.

Vorzugsweise wird eine Wand der Kammer als Druckmembran ausgebildet ist, die in Wirkverbindung mit einem druckaufnehmenden Element steht. Als ein solches Element kann ein vorzugsweise Piezoelement eingesetzt werden. Alternativ kann aber auch ein mechanischer Aufnehmer vorgesehen sein, wie z. B. ein beweglicher Stößel, der einen Schalter betätigt.

Zwei Ausführungsformen der Erfindung werden in den Figuren dargestellt. Diese zeigen im Einzelnen:
- **FIG. 1**: eine perspektivische Darstellung einer Anordnung mit rotativem Bewegungselement,
- **FIG. 2**: eine Schnittdarstellung der ersten Anordnung und
- **FIG. 3**: eine Schnittdarstellung einer Druckmessanordnung.

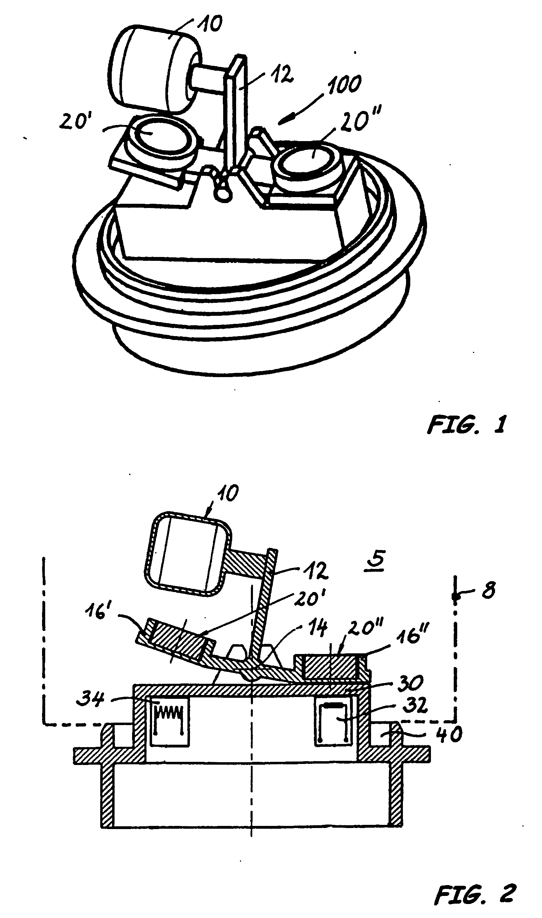

Die Figuren 1 und 2 zeigen die Anordnung 100, deren wesentliche Teile eine Wippe 12 und ein als Schwimm- oder Auftriebskörper ausgebildetes Bewegungselement 10 sind, welches an einem etwa senkrecht hoch stehenden Steg der Wippe 12 befestigt ist.

Diese Anordnung befindet sich in einem angedeuteten Behälter 8 für eine Waschflüssigkeit 5. Die Anordnung könnte am Boden des Behälters angeordnet sein. In der Schnittzeichnung ist eine Nut 40 angedeutet, die zur Aufnahme einer zylindrischen Wandung eines Behälters geeignet ist. Der Behälter kann in der Nut flüssigkeitsdicht abgedichtet sein. Andere beliebige Anordnungen sind natürlich möglich. Beispielsweise kann auch die Anordnung gemäß Fig. 2 kopfüber von oben in dem Behälter eingebracht werden. Die hierbei anders herum gerichtete Auftriebskraft muss bei der Ausbildung und der Winkelgestaltung der Wippe berücksichtigt werden. Der Fachmann kann leicht nach der Beschreibung der Erfindung entsprechende Abwandlungen der Konstruktion unter Beibehaltung des Prinzips vomehmen.

Die Wippe hat zwei unter stumpfen Winkel zueinander stehende Arme 16',16", die je einen Permanentmagneten 20',20" tragen. Die neutrale Lage der Wippe in der Flüssigkeit ist so austariert, dass der Schwimmkörper angehoben wird und der linke Arm 16' vom Permanentmagneten 20' entfernt steht. Der linke Arm 16' ist im Bereich eines Elektromagneten 34 angeordnet. In der neutralen Lage befindet sich der zweite, rechte Permanentmagnet 20" in der Nähe eines Reed-Kontakts 32. Mit Bezugszeichen 30 ist eine Platine angedeutet, die sowohl den Elektromagneten 34 als auch den Reed-Kontakt und möglicherweise weitere elektrische Bauelemente, Leitungen und Kontakte oder auch eine integrierte Elektronik trägt.

Bei Stromfluss durch die Spule des Elektromagneten 34 wird die Wippe um die Achse 14 drehend nach links bewegt. Der rechte Arm 16" entfernt sich dabei vom Reed-Kontakt 32. Von einer nicht dargestellten Elektronik wird die Zeitverzögerung zwischen Stromfluss durch den Elektromagneten 34 und das Öffnen oder das Schließen des Reed-Kontakts erfasst. Dadurch kommt das Meldesignal zustande abhängig von der Länge der Zeitverzögerung, die umso größer ist, je stärker die Bewegung des Schwimmkörpers 10 durch Eis in der Waschflüssigkeit 5 behindert wird. Als Maßstab gilt eine Zeitverzögerung, die bei einer Waschflüssigkeit in vollständig fluidem Zustand messbar ist.

Ausgehend von dem Meldesignal wird die (nicht dargestellte) Heizeinrichtung in der Waschflüssigkeit eingeschaltet, wenn das Meldesignal eine abweichende, nämlich größere Zeitverzögerung meldet. Die Zeitverzögerung ist ein Maß für die Viskosität. Die Heizleistung kann entsprechend variabel eingestellt werden, so dass die Dosierung der eingebrachten Wärmeenergie von der Viskosität abhängig machbar ist.

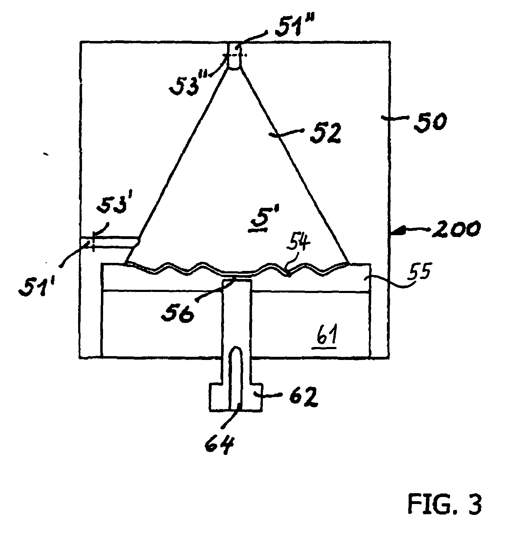

Die Fig. 3 zeigt schematisch die andere Anordnung 200 im Schnitt. Sie kann, wie die erste Anordnung im entsprechenden Zusatzbehälter des Kraftfahrzeugs oder durch kommunizierende Röhren mit der Flüssigkeit im Behälter in Verbindung stehen. Der Kem der Anordnung ist eine die Flüssigkeit 5' aufnehmende Kammer 52. Die Kammer ist konusförmig ausgebildet und in einem stabilen, vorzugsweise aus Kunststoff bestehenden Gehäuse 50 untergebracht. Im unteren Bereich befindet sich eine Druckmembran 54, an ihr ist die aus einem Piezoelement 62 bestehende Druckmessanordnung, die in einem Befestigungsflansch 61 aufgenommen ist, angeordnet. Alternativ kenn aber auch ein Stößel, der mit einem Schalter verbunden ist, als Aufnehmer vorgesehen sein. Um die Ausdehnung der Druckmembran 54 zu erlauben, ist auf der der Flüssigkeit abgewandten Membranseite ein Membranausdehnungsvolumen 55 vorgesehen. In Abhängigkeit von der Temperatur, von der Zusammensetzung und von dem Aggregatzustand ändert sich die Dichte, bzw. das spezifische Volumen der Flüssigkeit 5', wobei die Änderung des Aggregatzustandes hier besonders interessiert. Die Änderung der Zustandsgröße wird an der Kontaktstelle 56 zum Piezoelement als Druck aufgenommen. In Abhängigkeit vom gemessenen Druck gibt das Piezoelement über einen elektrischen Kontakt 64 ein Meldesignal ab. Das Meldesignal wird in einer, nicht dargestellten Elektronik derart verarbeitet, dass die von der Heizeinrichtung einzubringende Wärme von der Abweichung des gemessenen Drucks von dem Druck in der vollständig im fluiden Zustand befindlichen Flüssigkeit bemessen wird.

Die Kammer 52 hat Zu- und Abflusskanäle (51', 51"), die je mit einem Ventil (53', 53") verschließbar sind. Die Zu- und Abflusskanäle 51', 51 " können jedoch auch unverschlossen bleiben, da aufgrund der Kapillarkräfte normalerweise ein ausreichend definiertes Flüssigkeitsvolumen in der Kammer 52 gehalten wird. Bei Bedarf kann die Kammer 52 mit Flüssigkeit 5' durchgespült werden.

Die Ausgestaltung der Elektronik, ihre Einbindung in die Elektrik des Fahrzeugs und die Einschaltung der Heizeinrichtung werden nicht weiter dargestellt, da diese Einzelheiten für jeden Fachmann auf diesem Gebiet leicht umzusetzen sind.

### Liste Bezugszeichen

- 100: erste Anordnung
- 5, 5': Flüssigkeit
- 8: Behälter
- 10: Bewegungselement
- 12: Wippe
- 14: Achse
- 16', 16": Arme
- 20', 20": Permanentmagnete
- 30: Platine
- 32: Bewegungssensor = Reed-Kontakt
- 34: Elektromagnet (Spule)
- 40: Nut

- 200: zweite Anordnung
- 50: Isolierkörper
- 51'. 51": Zugangsröhrchen
- 52: Kammer
- 53', 53": Ventile
- 54: Membran
- 55: Membranausdehnungsvolumen
- 56: Berührungsfläche
- 61: Befestigungsflansch für Stößel mit Schalter oder Piezoelement
- 62: Piezoelement
- 64: elektrischer Kontakt

## Patentansprüche

1. Sensoranordnung zur Erfassung einer Zustandsgröße einer Flüssigkeit in einem Behälter, insbesondere von Wasser oder einer wässrigen Lösung in einem Behälter in Fahrzeugen, wobei ein die Zustandsgröße der Flüssigkeit **(5, 5')** erfassender Aufnehmer ein Meldesignal abgibt, welches eine Heizeinrichtung veranlasst, Wärme in den Behälter (8) einzubringen,
**dadurch gekennzeichnet, dass** ein die Viskosität oder das spezifische Volumen der Flüssigkeit **(5, 5')** erfassender Aufnehmer **(10,12,32,62)** eingesetzt wird, dessen Meldesignal die Heizeinrichtung aktiviert, wenn die ermittelte Viskosität von der Viskosität des fluiden Zustandes der Flüssigkeit **(5, 5')** oder das spezifische Volumen vom spezifischen Volumen des fluiden Zustandes der Flüssigkeit **(5, 5')** abweicht.

2. Sensoranordnung zur Erfassung der Viskosität nach Anspruch 1, **dadurch gekennzeichnet, dass** die Anordnung aus einem in Bewegung versetzbaren Element **(10,12)** und einem Bewegungssensor **(32)** besteht, der die -Bewegung des Bewegungselements **(10,12)** erfasst, und abhängig von der Bewegung ein Meldesignal abgibt, wobei das Meldesignal des Aufnehmers **(32)** in einer Elektronik derart verarbeitet wird, dass die von der Heizeinrichtung einzubringende Wärme von der Abweichung der Bewegung des Bewegungselements **(10,12)** von seiner Bewegung in der vollständig im fluiden Zustand befindlichen Flüssigkeit bemessen wird.

3. Sensoranordnung zur Erfassung der Viskosität nach einem der vorhergehenden Ansprüche, **dadurch gekennzeichnet, dass** das Bewegungselement **(10,12)** in lineare oder in rotative Bewegung versetzbar ist.

4. Sensoranordnung zur Erfassung der Viskosität nach einem der vorhergehenden Ansprüche, **dadurch gekennzeichnet, dass** das Bewegungselement **(10,12)** auf elektromechanischem Wege bewegbar ist.

5. Sensoranordnung nach Anspruch 3 oder 4, **dadurch gekennzeichnet, dass** das Bewegungselement **(10,12)** nach dem Prinzip des Elektromotors bewegt und die Leistungsaufnahme des Elektromotors als Maß für die vorhandene Viskosität genommen wird.

6. Sensoranordnung nach einem der Ansprüche 3 oder 4, **dadurch gekennzeichnet, dass** die Bewegung durch Aktivierung eines Elektromagneten **(34)** erfolgt, der mit einem im Bewegungselement **(10,12)** angeordneten Permanentmagneten **(20')** zusammen wirkt und die Zeitverzögerung zwischen Aktivierung des Elektromagneten **(34)** und Beginn der Bewegung als Maß für die vorhandene Viskosität genommen wird.

7. Sensoranordnung zur Erfassung der Viskosität nach einem der vorhergehenden Ansprüche, **dadurch gekennzeichnet, dass** der Bewegungssensor **(32)** aus einem Reed-Kontakt **(32)** besteht, der von einem im Bewegungselement **(10,14)** angeordneten Permanentmagneten **(20)** angesprochen wird.

8. Sensoranordnung zur Erfassung der Viskosität nach einem der Ansprüche 6 oder 7, **dadurch gekennzeichnet, dass** das Bewegungselement **(10)** an einer Wippe **(12)** befestigt ist, deren Arme **(16'; 16")** je einen Permanentmagneten **(20',20")** tragen, wobei ein erster Arm **(16')** im Bereich eines Elektromagneten **(34)** und ein zweiter Arm **(16")** im Bereich eines Reed-Kontakts **(32)** angeordnet ist.

9. Sensoranordnung zur Erfassung des spezifischen Volumens nach Anspruch 1, **dadurch gekennzeichnet, dass** der Aufnehmer **(200)** aus einer ein festes Volumen der Flüssigkeit **(5')** aufnehmenden Kammer **(52)** besteht, an der eine Druckmessanordnung **(54,62)** angeordnet ist, welche in Abhängigkeit vom gemessenen Druck ein Meldesignal abgibt, wobei das Meldesignal in einer Elektronik derart verarbeitet wird, dass die von der Heizeinrichtung einzubringende Wärme von der Abweichung des gemessenen Drucks von dem Druck in der vollständig im fluiden Zustand befindlichen Flüssigkeit **(5')** bemessen wird.

10. Sensoranordnung nach Anspruch 9, **dadurch gekennzeichnet, dass** die Kammer **(52)** zum Durchspülen mit Flüssigkeit **(5')** durchströmbar ist.

11. Sensoranordnung nach Anspruch 9 oder 10, **dadurch gekennzeichnet, dass** eine Wand der Kammer **(52)** als Druckmembran **(54)** ausgebildet ist, die in Wirkverbindung **(56)** mit einem druckaufnehmenden Element **(62)** steht.

12. Sensoranordnung nach Anspruch 11, **dadurch gekennzeichnet, dass** das druckaufnehmende Elemen**t (62)** ein Piezoelement ist.

## Claims

1. Sensor arrangement for detecting a parameter of a fluid in a container, in particular of water or an aqueous solution in a container in vehicles, wherein a pickup detecting the parameter of the fluid (5, 5') issues a status signal, which causes a heating device to supply heat to the container (8), **characterised in that** a pickup (10, 12, 32, 62) detecting the viscosity or specific volume of the fluid (5, 5') is used, whose status signal activates the heating device if the viscosity detected differs from the viscosity of the fluid state of the fluid (5, 5') or the specific volume differs from the specific volume of the fluid state of the fluid (5, 5').

2. Sensor arrangement for detecting viscosity according to claim 1, **characterised in that** the arrangement consists of an element (10, 12) which may be set in motion and a movement sensor (32), which detects the movement of the movement element (10, 12) and depending on the movement issues a status signal, wherein the status signal of the sensor (32) is so processed in an electronic device that the heat to be supplied by the heating device is dimensioned by the deviation of the movement of the movement element (10, 12) from its movement in the fluid in the fully fluid state.

3. Sensor arrangement for detecting viscosity according to one of the preceding claims, **characterised in that** the movement element (10, 12) may be set in linear or rotary motion.

4. Sensor arrangement for detecting viscosity according to one of the preceding claims, **characterised in that** the movement element (10, 12) is movable by electromechanical means.

5. Sensor arrangement according to claim 3 or 4, **characterised in that** the movement element (10, 12) moves according to the principle of the electric motor and the power take-up of the electric motor is taken as a measure of the viscosity present.

6. Sensor arrangement according to either claim 3 or 4, **characterised in that** the movement is effected by activation of an electromagnet (34), which cooperates with a permanent magnet (20') disposed in the movement element (10, 12) and the time lag between activation of the electromagnet (34) and the start of movement is taken as a measure of the viscosity present.

7. Sensor arrangement for detecting viscosity according to one of the preceding claims, **characterised in that** the movement sensor (32) consists of a reed contact (32), which is actuated by a permanent magnet (20) disposed in the movement element (10, 14).

8. Sensor arrangement for detecting viscosity according to either claim 6 or 7, **characterised in that** the movement element (10) is fixed to a rocker (12), whose arms (16'; 16") each carry a permanent magnet (20', 20"), a first arm (16') being disposed in the region of an electromagnet (34) and a second arm (16") being disposed in the region of a reed contact (32).

9. Sensor arrangement for detecting specific volume according to claim 1, **characterised in that** the pickup (200) consists of a chamber (52) receiving a fixed volume of the fluid (5'), on which chamber a pressure measuring arrangement (54, 62) is mounted, which according to the pressure measured issues a status signal, which is so processed in an electronic device that the heat to be supplied by the heating device is dimensioned by the deviation of the pressure measured from the pressure of the fluid (5') in the fully fluid state.

10. Sensor arrangement according to claim 9, **characterised in that** the chamber (52) may be subjected to a through-flow in order to be flushed with fluid (5').

11. Sensor arrangement according to claim 9 or 10, **characterised in that** one wall of the chamber (52) is formed as a pressure membrane (54) which is in active communication (56) with a pressure pickup element (62).

12. Sensor arrangement according to claim 11, **characterised in that** the pressure pickup element (62) is a piezoelement.

## Revendications

1. Dispositif capteur pour détecter un paramètre d'état d'un liquide dans un réservoir, notamment d'eau ou d'une solution aqueuse contenue dans un réservoir de véhicules, dans lequel un capteur détectant la grandeur d'état du liquide (5, 5') délivre un signal d'état qui amène un dispositif de chauffage à introduire de la chaleur dans le réservoir (8),
**caractérisé en ce qu'**il est utilisé un capteur (10, 12, 32, 62) détectant la viscosité ou le volume spécifique du liquide (5, 5'), dont le signal d'état active le dispositif de chauffage lorsque la viscosité détectée diffère de la viscosité de l'état fluide du liquide (5, 5') ou lorsque le volume spécifique diffère du volume spécifique de l'état fluide du liquide (5, 5').

2. Dispositif capteur pour détecter la viscosité selon la revendication 1, **caractérisé en ce que** le dispositif se compose d'un élément (10, 12) pouvant être mis en mouvement, et d'un capteur de mouvement (32) qui détecte le mouvement de l'élément mobile (10, 12), et qui délivre un signal d'état en fonction du mouvement, dans lequel le signal d'état du capteur (32) est traité dans une électronique de telle sorte que la chaleur à introduire par le dispositif de chauffage soit calculée par l'écart du mouvement de l'élément mobile (10, 12) à son mouvement dans le liquide se trouvant à l'état entièrement fluide.

3. Dispositif capteur pour détecter la viscosité selon l'une des revendications précédentes, **caractérisé en ce que** l'élément mobile (10, 12) peut être mis dans un mouvement linéaire ou rotatif.

4. Dispositif capteur pour détecter la viscosité selon l'une des revendications précédentes, **caractérisé en ce que** l'élément mobile (10, 12) peut être déplacé par voie électromécanique.

5. Dispositif capteur selon la revendication 3 ou 4, **caractérisé en ce que** l'élément mobile (10, 12) est déplacé selon le principe du moteur électrique, et **en ce que** la puissance absorbée du moteur électrique est prise en compte en tant que grandeur pour la viscosité existante.

6. Dispositif capteur selon la revendication 3 ou 4, **caractérisé en ce que** le mouvement s'effectue par l'activation d'un électro-aimant (34) qui agit conjointement avec un aimant permanent (20') disposé dans l'élément mobile (10, 12), et **en ce que** le retard entre l'activation de l'électro-aimant (34) et le début du mouvement est prise en compte en tant que grandeur pour la viscosité existante.

7. Dispositif capteur pour détecter la viscosité selon l'une des revendications précédentes, **caractérisé en ce que** le capteur de mouvement (32) se compose d'un contact à lames souples (32), qui est déclenché par un aimant permanent (20) disposé dans l'élément mobile (10, 14).

8. Dispositif capteur pour détecter la viscosité selon l'une des revendications 6 ou 7, **caractérisé en ce que** l'élément mobile (10) est fixé sur une bascule (12) dont les bras (16' ; 16") portent chacun un aimant permanent (20', 20"), dans lequel un premier bras (16') est disposé dans la zone d'un électro-aimant (34), et un deuxième bras (16") est disposé dans la zone d'un contact à lames souples (32).

9. Dispositif capteur du volume spécifique selon la revendication 1, **caractérisé en ce que** le capteur (200) se compose d'une chambre (52) contenant un volume donné du liquide (5'), au niveau de laquelle est disposé un dispositif de mesure de pression (54, 62) qui délivre un signal d'état en fonction de la pression mesurée, dans lequel le signal d'état est traité dans une électronique de telle sorte que la chaleur à introduire par le dispositif de chauffage soit calculée par l'écart de la pression mesurée à la pression du liquide (5') se trouvant à l'état entièrement fluide.

10. Dispositif capteur selon la revendication 9, **caractérisé en ce que**, pour le rinçage, la chambre (52) peut être traversée par le liquide (5').

11. Dispositif capteur selon la revendication 9 ou 10, **caractérisé en ce qu'**une paroi de la chambre (52) est formée sous la forme d'une membrane de pression (54), qui est en liaison active (56) avec un élément de détection de pression (62).

12. Dispositif capteur selon la revendication 11, **caractérisé en ce que** l'élément de détection de pression (62) est un élément piézoélectrique.
